# EUROPEAN PATENT SPECIFICATION

(11) **EP 4 250 593 B1**
(45) Date of publication and mention of the grant of the patent: **29.10.2025**
(21) Application number: 22783905.7
(22) Date of filing: 28.03.2022
(51) Int. Cl.: H04B 7/185, H04W 4/021, H04W 4/029, H04W 48/04, H04W 60/04, H04W 84/04, H04W 84/06

(54) **SATELLITE TERMINAL ACCESS MANAGEMENT METHOD, COMPUTER APPARATUS, AND STORAGE MEDIUM**
ZUGANGSVERWALTUNGSVERFAHREN FÜR SATELLITENENDGERÄT, COMPUTERVORRICHTUNG UND SPEICHERMEDIUM
PROCÉDÉ DE GESTION D'ACCÈS À UN TERMINAL SATELLITE, APPAREIL INFORMATIQUE ET SUPPORT DE STOCKAGE

(30) Priority: 09.04.2021 CN 202110383608
(43) Date of publication of application: 27.09.2023
(73) Proprietor: IPlook Networks Co., Ltd., Guangzhou, Guangdong 510700 (CN)
(72) Inventor: WU, Yunpu, Guangzhou, Guangdong 510700 (CN); XIE, Wanyi, Guangzhou, Guangdong 510700 (CN); ZHU, Youlin, Guangzhou, Guangdong 510700 (CN); WANG, Zhen, Guangzhou, Guangdong 510700 (CN); QIN, Hai, Guangzhou, Guangdong 510700 (CN); BU, Zhanhui, Guangzhou, Guangdong 510700 (CN)
(74) Representative: Meyer, Thorsten
(86) International application number: PCT/CN2022/083498
(87) International publication number: WO 2022/213838

(56) References cited:
- WO-A1-2020/034324
- CN-A- 111 586 582
- CN-A- 112 015 851
- CN-A- 113 179 489
- US-A1- 2015 163 867
- US-A1- 2019 268 874

## Description

### TECHNICAL FIELD

This application relates to the technical field of mobile communication, and in particular to a satellite terminal access management method in a space-ground integrated information network, a computer apparatus and a storage medium.

### BACKGROUND

Space-ground integrated information network mainly consists of a core network, a space base station (communication satellite), a satellite terminal (mobile terminal) and other components. In the operation process of the space-ground integrated information network, it is necessary to carry out the process of satellite terminal accessing to the core network, which is also called the process of satellite terminal registering with the core network. In response to the access or registration request of the satellite terminal, the core network implements the access management strategy. Specifically, the location information of the satellite terminal is an important factor to be considered in the access management strategy, so it's required for the core network to determine the location information of the satellite terminal. However, longitude and latitude information is used in the positioning system of the satellite terminal, which does not match the common data format of the core network in the existing technical framework, it is difficult for the core network to perform operations such as create, retrieve, update or delete based on the longitude and latitude information, thus affecting the access management to the satellite terminal. US2019/268874A1 discloses a base station computer that includes a processor and memory storing instructions executable by the processor. The processor may be programmed to: determine a geographic position of a user terminal (UT); store the position in the memory; determine to page the UT; correlate a satellite beam based on the position; and page the UT via the satellite beam. WO2020/034324A1 discloses a wireless terminal determining a tracking area code (TAC) from a geographic position of the wireless terminal. From the TAC, the wireless terminal determines the tracking area identity based on an indication from the network-side regarding whether or not geographic position based tracking area identity determination is to be used or not. CN112015851A discloses a spatio-temporal data storage and retrieval method based on Beidou grid codes to increase the user retrieval speed and relieve the computing pressure and the communication broadband pressure.

### SUMMARY OF THE INVENTION

In view of at least one of the above technical problems, the purpose of this application is to provide a satellite terminal access management method in a space-ground integrated information network, a computer apparatus and a storage medium.

As one aspect, the embodiment of the present application includes a satellite terminal access management method in a space-ground integrated information network, performed by a core network, including:
obtaining an access registration request submitted by a satellite terminal through a communication satellite, the access registration request including location information of the satellite terminal;
obtaining a first Beidou grid code corresponding to a location of the satellite terminal, wherein the location of the satellite terminal is based on the location information;
querying a redis database according to the first Beidou grid code, wherein the redis database is stored with mapping relationships between a plurality of Beidou grid codes and a plurality of tracking area codes in a form of a data relationship tree, the tracking area codes are located in a root node of the data relationship tree, and the Beidou grid codes are located in a leaf node of the data relationship tree;
determining a first tracking area code according to a query result of the redis database;
performing access management on the satellite terminal according to the first tracking area code.

Further, determining a first tracking area code according to a query result of the redis database includes:
when a corresponding tracking area code is found in the redis database, determining the corresponding tracking area code as the first tracking area code,

Further, determining a first tracking area code according to a query result of the redis database further includes:
when no corresponding tracking area code is found in the redis database, determining the first tracking area code according to the first Beidou grid code by using a longest path algorithm.

Further, determining the first tracking area code according to the first Beidou grid code by using a longest path algorithm includes:
finding a target Beidou grid code from the plurality of Beidou grid codes stored in the redis database, by calculating that, a path between the first Beidou grid code and one Beidou grid code is longer than that between the first Beidou grid code and any of other Beidou grid codes, then determining the path as a longest path, and the one Beidou grid code as the target Beidou grid code;
determining the tracking area code in the data relationship tree where the target Beidou grid code is located as the first tracking area code.

Further, performing access management on the satellite terminal according to the first tracking area code includes:
when the first tracking area code is detected in a preset restriction list, performing restricted access on the satellite terminal.

Further, the satellite terminal access management method in a space-ground integrated information network further includes:
obtaining an electronic map;
converting longitude and latitude information in the electronic map into Beidou grid codes;
generating the data relationship tree according to the Beidou grid code which are planned and conversed based on tracking area codes, wherein the data relationship tree is configured to represent mapping relationships between the Beidou grid codes and the tracking area codes;
storing the data relationship tree into the redis database.

As one more aspect, the embodiment of the present application includes a computer apparatus including a memory for storing at least one program and a processor for loading at least one program to execute the satellite terminal access management method when executed by a processor.

As one more aspect, the embodiment of the present application includes a storage medium having a processor-executable program stored thereon, and the processor-executable program, when executed by a processor, causes the processor to implement the satellite terminal access management method.

The beneficial effects of this application follow. The satellite terminal access management method according to the present embodiment converts the location information used in the positioning system of the satellite terminal into the tracking area code applicable to the core network, accordingly the core network may perform operations such as create, retrieve, update or delete based on the first tracking area code found, so as to perform access management on the satellite terminal. The method can avoid every query of electronic map and every area matching with UDM of satellite terminal for each on-line satellite terminal, thereby avoiding excessively long links and simplifying the access matching process.

### BRIEF DESCRIPTION OF THE DRAWINGS

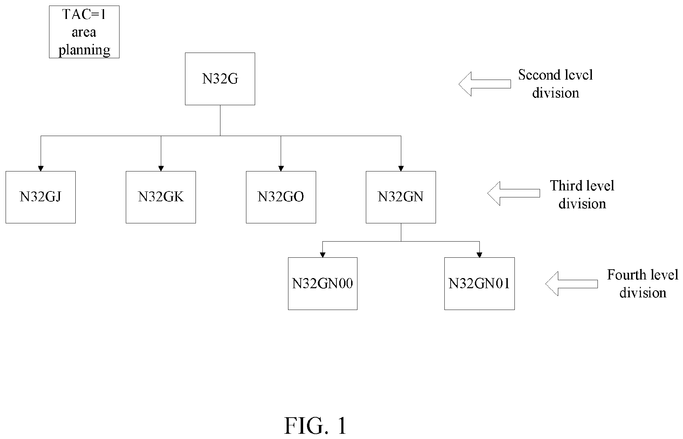

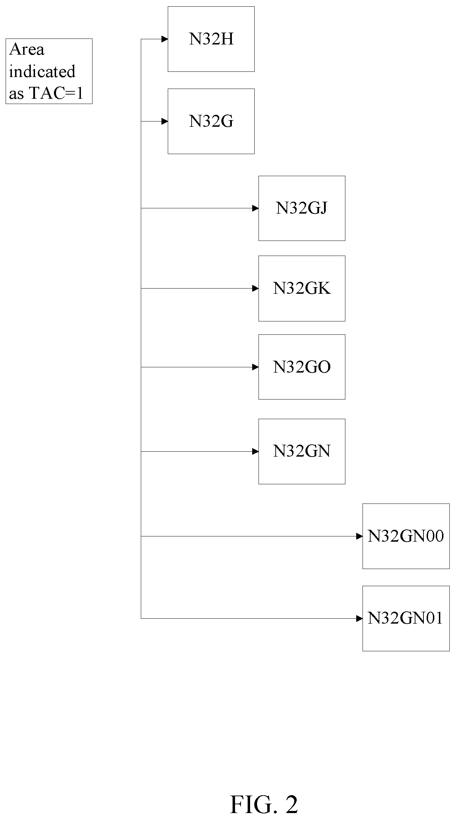

FIG. 1 and FIG. 2 are schematic diagrams of a data relationship tree according to an embodiment of the present application.

### DETAILED DESCRIPTION OF ILLUSTRATED EMBODIMENTS

In the present embodiment, a satellite terminal access management method in a space-ground integrated information network may be implemented by a 5G core network or other more advanced core networks. Specifically, the satellite terminal access management method may be implemented by a specific network element in the core network, such as an AMF network element, or by a special computer apparatus.

The satellite terminal access management method in a space-ground integrated information network includes the following steps:
S1, obtaining an access registration request submitted by a satellite terminal;
S2, obtaining a first Beidou grid code corresponding to a location of the satellite terminal;
S3, querying a redis database according to the first Beidou grid code, wherein the redis database is stored with mapping relationships between a plurality of Beidou grid codes and a plurality of tracking area codes in a form of a data relationship tree, the tracking area codes are located in a root node of the data relationship tree, and the Beidou grid codes are located in a leaf node of the data relationship tree;
S4, determining a first tracking area code according to a query result of the redis database; and
S5, performing access management on the satellite terminal according to the first tracking area code.

In the present embodiment, before performing Steps S1-S5, a redis database may be established, by the following steps:
P1, obtaining an electronic map;
P2, converting longitude and latitude information in the electronic map into Beidou grid codes;
P3, generating the data relationship tree according to the Beidou grid codes which are planned and conversed based on the tracking area code, wherein the data relationship tree is configured to represent mapping relationships between the Beidou grid codes and the tracking area codes;
P4, storing the data relationship tree into the redis database.

In Step P1, the core network obtains the electronic map for the usually active area of the satellite terminal at the initialization stage, and the electronic map contains longitude and latitude information described for the locations of various points.

In Step P2, the longitude and latitude information is converted into Beidou grid codes such as in the form of N32G, according to the technical specifications of the Beidou navigation system. In the present embodiment, Beidou grid codes such as N32G, N32GJ, N32GK, N32GO, N32GN, N32GN00 and N32GN01 may be converted and obtained through the core network, and the areas represented by these Beidou grid codes are all located in the same area which is proceeded with the first level division according to a tracking area code (TAC). Specifically, the area with the Beidou grid codes N32G and N32H are located in the same area with the tracking area code of 1, codes N32H and N32G belong to the second level division for this area, and codes N32GJ, N32GK, N32GO and N32GN belong to the third level division for the corresponding area of code N32G, and codes N32GN00 and N32GN01 belong to the fourth level division for the corresponding area of code N32GN. Referring to FIG. 1 and FIG. 2, these tracking area codes and Beidou grid codes form a tree-like data structure. The tracking area codes are located at the root node of the data relationship tree, and the Beidou grid codes are located at the leaf node of the data relationship tree. A tracking area code corresponding to a known Beidou grid code may be queried in the data relationship tree.

In Step P3 and P4, the mapping relationships between Beidou grid codes and tracking area codes are stored in the redis database in the form of data relationship tree as shown in FIG. 1 and FIG. 2, by the core network.

After Steps P1-P4 are executed, the core network obtains a redis database stored with the data relationship tree, in which the mapping relationships between a plurality of Beidou grid codes and a plurality of tracking area codes are stored. Steps S1-S5 may be executed based on Steps P1-P4.

In Step S1, the core network obtains the access registration request submitted by the satellite terminal through the communication satellite. Specifically, the satellite terminal sends the access registration request to the communication satellite, and then the communication satellite sends the access registration request to the core network. The access registration request includes location information of the satellite terminal.

In Step S2, the first Beidou grid code may be directly collected or generated by the satellite terminal, or obtained according to the longitude and latitude information of the satellite terminal through its own positioning system. When the longitude and latitude information is included in the access registration request, it's necessary for the core network to convert the longitude and latitude information into the format of Beidou grid code, so as to obtain the first Beidou grid code.

In Step S3, the redis database obtained in Steps P1-P4 is queried, by taking the first Beidou grid code as a query condition. Once a Beidou grid code identical with the first Beidou grid code is found in the redis database, the corresponding tracking area code can be queried, that's because a many-to-one relationship between Beidou grid codes and tracking area codes is presented in the redis database. Therefore, the query results of redis database include that: the first tracking area code corresponding to the first Beidou grid code is found in the redis database; or no first tracking area code corresponding to the first Beidou grid code is found in the redis database.

For example, in the case that the redis database only stores the data relationship tree shown in FIG. 1 and FIG. 2, when the first Beidou grid code is N32GN01, then the corresponding first tracking area code is queried as TAC=1. When the first Beidou grid code is N32GN02, then no corresponding first tracking area code is queried. In this case, the first tracking area code may be determined by using a longest path algorithm according to the first Beidou grid code. Specifically, a target Beidou grid code can be found out from the plurality of Beidou grid codes stored in the redis database, wherein the longest path is formed between the target Beidou grid code and the first Beidou grid code. For example, in all the Beidou grid codes shown in FIG. 1 and FIG. 2, the path formed between the Beidou grid code N32GK and the first Beidou grid code N32GN02 is longer than that formed between the first Beidou grid code N32GN02 and any of other Beidou grid codes, then the Beidou grid code N32GK is determined as the target Beidou grid code in this embodiment, and the tracking area code in the data relationship tree where the target Beidou grid code N32GK is located (i.e., the data relationship tree shown in FIG. 1 and FIG. 2) is TAC=1, so the tracking area code TAC=1 is determined as the first tracking area code.

By using the longest path algorithm to determine the first tracking area code according to the first Beidou grid code, the first Beidou grid code can be still matched to the corresponding first tracking area code when no Beidou grid code identical with the first Beidou grid code exists in the data relationship tree. Moreover, since there is the longest path between the first Beidou grid code and the target Beidou grid code, interference in the matching process can be avoided.

In the present embodiment, by executing Steps S1-S4, the core network converts the location information used in the positioning system of the satellite terminal into the tracking area code applicable to the core network, accordingly the core network may perform operations such as create, retrieve, update or delete based on the first tracking area code found, so as to further perform access management on the satellite terminal. Specifically, the core network may query whether the first tracking area code exists in a preset restriction list. If the first tracking area code exists in the restriction list, the core network restricts the access to satellite terminals. If the first tracking area code is not found in the restriction list, the core network allows the access and registration of satellite terminals. Based on the above, optionally, the core network may also determine whether to perform paging or differential charging operations and the like on the satellite terminal, by judging whether the first tracking area code exists in other lists.

Differing from the technical scheme in the prior art which determines the location of the satellite terminal by querying the electronic map so as to determine whether the satellite terminal access is restricted, the satellite terminal access management method according to the present embodiment can avoid every query of electronic map and every area matching with UDM of satellite terminal for each on-line satellite terminal, so as to avoid excessively long links and simplify the access matching process.

A Computer program can be written according to the satellite terminal access management method in the present embodiment, into a memory of a computer apparatus or an independent storage medium. After the computer program is read, a processor can be instructed to execute the satellite terminal access management method in the embodiment, so as to achieve the same technical effect as the method embodiment.

It should be noted that, unless otherwise specified, when one feature is described to be "fixed" or "connected" to another feature, these features may be directly or indirectly fixed or connected. In addition, the position descriptions of "up", "down", "left" and "right" used in this disclosure are only used in terms of the positions of the components in the attached drawings. Singular forms of "a", "an", "one", "said" and "the" in the disclosure are also intended to include their plural forms, unless the context clearly indicates otherwise. In addition, unless otherwise specified, all technical and scientific terms used in these embodiments have the same meaning as would normally be understood by a person skilled in the technical field. The terms used in these embodiments statement are intended only to describe specific embodiments and are not intended to restrict this application. The term "and/or" as used in this embodiment may include any combination of one or more related listed items.

It should be understood that although the terms first, second, third, etc. may be used to describe various components in this disclosure, these components should not be limited to these terms. These terms are used only to distinguish components of the same type from each other. For example, the first component may also be referred to as the second component, and similarly the second binary component may be referred to as the first component, without leaving the scope of this disclosure. The use for any or all examples or exemplary language ("for example", "such as", etc.) provided by this disclosure is intended only to better illustrate the embodiments of this application and does not limit the scope of this application, unless otherwise required.

It should be recognized that embodiments of this application may be realized or implemented by computer hardware, a combination of hardware and software, or computer instructions stored in a non-temporary computer readable memory. The method may be implemented in a computer program using standard programming techniques including a non-temporary computer readable storage medium configured with a computer program, and the storage medium is configured to enable the computer to operate in a specific and predefined manner according to the method described in the specific embodiment and the accompanying drawings. Each program may be implemented in a high-level procedural or object-oriented programming language to communicate with computer systems. However, the program may be implemented in assembly or machine language if desired. In any case, the language may be a compiled or interpreted language. In addition, the program may be run on a programmed ASIC for this purpose.

Furthermore, the operations of the processes described in this embodiment may be performed in any appropriate order, unless otherwise directed by this embodiment or otherwise clearly contradicted by the context. The procedures described in this embodiment (or variations and/or combinations thereof) may be executed under the control of one or more computer systems configured with executable instructions and may be implemented as code (e.g., executable instructions, one or more computer programs, or one or more applications) jointly executed on one or more processors, by hardware or a combination thereof. The computer program may include multiple instructions that may be executed by one or more processors.

Further, the method may be operationally connected to any type of suitable computing platform, including but not limited to personal computers, minicomputers, mainframes, workstations, networks or distributed computing environments, separate or integrated computer platforms, or communications with charged particle tools or other imaging devices. All aspects of this application may be implemented in machine-readable code stored on non-temporary storage media or devices, whether removable or integrated into a computing platform, such as a hard disk, an optical read and/or write storage media, a RAM, a ROM, etc., may be readable by a programmable computer. The storage medium or devices, when read by the computer, may be configured to operate the computer to perform the process described here. In addition, all or parts of machine-readable codes may be transmitted over wired or wireless networks. Where such media include instructions or programs that implement the steps described above in combination with a microprocessor or other data processors, the application described in the embodiments may include these and other different types of non-temporary computer readable storage media. This application also includes the computer itself when programmed in accordance with the methods and techniques described in this application.

A computer program may be applied to the input data to perform the function described in this embodiment, thereby transforming the input data to generate output data stored in a non-volatile memory. The output information may also be applied to one or more output devices such as displays. In the preferred embodiment of this application, the transformed data represents physical and tangible objects, including specific visual depictions of physical and tangible objects generated on the displays.

## Claims

1. A satellite terminal access management method in a space-ground integrated information network, performed by a core network, comprising:
obtaining an access registration request submitted by a satellite terminal through a communication satellite, the access registration request including location information of the satellite terminal;
obtaining a first Beidou grid code corresponding to a location of the satellite terminal, wherein the location of the satellite terminal is based on the location information;
querying a redis database according to the first Beidou grid code, wherein the redis database is stored with mapping relationships between a plurality of Beidou grid codes and a plurality of tracking area codes in a form of a data relationship tree, the tracking area codes are located in a root node of the data relationship tree, and the Beidou grid codes are located in a leaf node of the data relationship tree;
determining a first tracking area code according to a query result of the redis database;
performing access management on the satellite terminal according to the first tracking area code.

2. The satellite terminal access management method in a space-ground integrated information network according to claim 1, wherein said determining a first tracking area code according to a query result of the redis database comprises:
when a corresponding tracking area code is found in the redis database, determining the corresponding tracking area code as the first tracking area code.

3. The satellite terminal access management method in a space-ground integrated information network according to claim 2, wherein said determining a first tracking area code according to a query result of the redis database further comprises:
when no corresponding tracking area code is found in the redis database, determining the first tracking area code according to the first Beidou grid code by using a longest path algorithm.

4. The satellite terminal access management method in a space-ground integrated information network according to claim 3, wherein said determining the first tracking area code according to the first Beidou grid code by using a longest path algorithm comprises:
finding a target Beidou grid code from the plurality of Beidou grid codes stored in the redis database, by calculating that, a path between the first Beidou grid code and one Beidou grid code is longer than that between the first Beidou grid code and any of other Beidou grid codes, then determining the path as a longest path, and the one Beidou grid code as the target Beidou grid code;
determining the tracking area code in the data relationship tree where the target Beidou grid code is located as the first tracking area code.

5. The satellite terminal access management method in a space-ground integrated information network according to claim 1, wherein said performing access management on the satellite terminal according to the first tracking area code comprises:
when the first tracking area code is detected in a preset restriction list, performing restricted access on the satellite terminal.

6. The satellite terminal access management method in a space-ground integrated information network according to any of claims 1-5, further comprising:
obtaining an electronic map;
converting longitude and latitude information in the electronic map into Beidou grid codes;
generating the data relationship tree according to the Beidou grid code which are planned and conversed based on tracking area codes, wherein the data relationship tree is configured to represent mapping relationships between the Beidou grid codes and the tracking area codes;
storing the data relationship tree into the redis database.

7. A computer apparatus, comprising a memory for storing at least one program and a processor for loading said at least one program to execute the method according to any of claims 1-6 when executed by a processor.

8. A storage medium, having a processor-executable program stored thereon, wherein the processor-executable program, when executed by a processor, causes the processor to implement the method according to any of claims 1-6.

## Patentansprüche

1. Verfahren zur Zugangsverwaltung von Satellitenterminals in einem weltraum-bodenintegrierten Informationsnetzwerk, durchgeführt durch ein Kernnetzwerk, umfassend:
Empfangen eines Zugangsregistrierungsantrags, der von einem Satellitenterminal über einen Kommunikationssatelliten übermittelt wird, wobei der Zugangsregistrierungsantrag Standortinformationen des Satellitenterminals umfasst;
Ermitteln eines ersten Beidou-Rastercodes, der einem Standort des Satellitenterminals entspricht, wobei der Standort des Satellitenterminals auf den Standortinformationen basiert;
Abfragen einer Redis-Datenbank gemäß dem ersten Beidou-Rastercode, wobei die Redis-Datenbank Abbildungsbeziehungen zwischen einer Vielzahl von Beidou-Rastercodes und einer Vielzahl von Tracking-Gebietscodes in Form eines Datenbeziehungsbaums speichert, die Tracking-Gebietscodes sich in einem Wurzelknoten des Datenbeziehungsbaums befinden und die Beidou-Rastercodes sich in einem Blattknoten des Datenbeziehungsbaums befinden;
Bestimmen eines ersten Tracking-Gebietscodes gemäß einem Abfrageergebnis der Redis-Datenbank;
Durchführen der Zugangsverwaltung des Satellitenterminals gemäß dem ersten Tracking-Gebietscode.

2. Verfahren zur Zugangsverwaltung von Satellitenterminals in einem weltraum-bodenintegrierten Informationsnetzwerk nach Anspruch 1, wobei das Bestimmen eines ersten Tracking-Gebietscodes gemäß einem Abfrageergebnis der Redis-Datenbank Folgendes umfasst:
wenn ein entsprechender Tracking-Gebietscode in der Redis-Datenbank gefunden wird, Bestimmen des entsprechenden Tracking-Gebietscodes als den ersten Tracking-Gebietscode.

3. Verfahren zur Zugangsverwaltung von Satellitenterminals in einem weltraum-boden integrierten Informationsnetzwerk nach Anspruch 2, wobei das Bestimmen eines ersten Tracking-Gebietscodes gemäß einem Abfrageergebnis der Redis-Datenbank ferner Folgendes umfasst:
wenn kein entsprechender Tracking-Gebietscode in der Redis-Datenbank gefunden wird, Bestimmen des ersten Tracking-Gebietscodes gemäß dem ersten Beidou-Rastercode unter Verwendung eines längsten-Pfad-Algorithmus.

4. Verfahren zur Zugangsverwaltung von Satellitenterminals in einem weltraum-boden integrierten Informationsnetzwerk nach Anspruch 3, wobei das Bestimmen des ersten Tracking-Gebietscodes gemäß dem ersten Beidou-Rastercode unter Verwendung eines längsten-Pfad-Algorithmus Folgendes umfasst:
Finden eines Ziel-Beidou-Rastercodes aus der Vielzahl von in der Redis-Datenbank gespeicherten Beidou-Rastercodes, indem berechnet wird, dass ein Pfad zwischen dem ersten Beidou-Rastercode und einem Beidou-Rastercode länger ist als der zwischen dem ersten Beidou-Rastercode und einem der anderen Beidou-Rastercodes, Bestimmen des Pfads als einen längsten Pfad und des einen Beidou-Rastercodes als den Ziel-Beidou-Rastercode;
Bestimmen des Tracking-Gebietscodes in dem Datenbeziehungsbaum, in dem sich der Ziel-Beidou-Rastercode befindet, als den ersten Tracking-Gebietscode.

5. Verfahren zur Zugangsverwaltung von Satellitenterminals in einem weltraum-boden integrierten Informationsnetzwerk nach Anspruch 1, wobei das Durchführen der Zugangsverwaltung des Satellitenterminals gemäß dem ersten Tracking-Gebietscode Folgendes umfasst:
wenn der erste Tracking-Gebietscode in einer voreingestellten Einschränkungsliste erkannt wird, Durchführen eines eingeschränkten Zugangs für das Satellitenterminal.

6. Verfahren zur Zugangsverwaltung von Satellitenterminals in einem weltraum-boden integrierten Informationsnetzwerk nach einem der Ansprüche 1-5, ferner umfassend:
Empfangen einer elektronischen Karte;
Umwandeln von Längen- und Breitengradinformationen in der elektronischen Karte in Beidou-Rastercodes;
Erzeugen des Datenbeziehungsbaums gemäß den Beidou-Rastercodes, die geplant und basierend auf Tracking-Gebietscodes umgewandelt sind, wobei der Datenbeziehungsbaum dazu eingerichtet ist, Abbildungsbeziehungen zwischen den Beidou-Rastercodes und den Tracking-Gebietscodes darzustellen;
Speichern des Datenbeziehungsbaums in der Redis-Datenbank.

7. Computerapparat, umfassend einen Speicher zum Speichern von mindestens einem Programm und einen Prozessor zum Laden des mindestens einen Programms, um das Verfahren nach einem der Ansprüche 1-6 auszuführen, wenn es von einem Prozessor ausgeführt wird.

8. Speichermedium, auf dem ein prozessor-ausführbares Programm gespeichert ist, wobei das prozessor-ausführbare Programm, wenn es von einem Prozessor ausgeführt wird, den Prozessor veranlasst, das Verfahren nach einem der Ansprüche 1-6 zu implementieren.

## Revendications

1. Procédé de gestion d'accès d'un terminal satellite dans un réseau d'information intégré espace-sol, mis en œuvre par un réseau central, comprenant :
l'obtention d'une demande d'enregistrement d'accès soumise par un terminal satellite via un satellite de communication, la demande d'enregistrement d'accès comprenant des informations de position du terminal satellite ;
l'obtention d'un premier code de grille Beidou correspondant à une position du terminal satellite, la position du terminal satellite étant basée sur les informations de position ;
l'interrogation d'une base de données redis selon le premier code de grille Beidou, la base de données redis stockant des relations de correspondance entre une pluralité de codes de grille Beidou et une pluralité de codes de zone de suivi sous la forme d'un arbre de relations de données, les codes de zone de suivi étant situés dans un nœud racine de l'arbre de relations de données, et les codes de grille Beidou étant situés dans un nœud feuille de l'arbre de relations de données ;
la détermination d'un premier code de zone de suivi selon un résultat d'interrogation de la base de données redis ;
l'exécution de la gestion d'accès sur le terminal satellite selon le premier code de zone de suivi.

2. Procédé de gestion d'accès d'un terminal satellite dans un réseau d'information intégré espace-sol selon la revendication 1, dans lequel ladite détermination d'un premier code de zone de suivi selon un résultat d'interrogation de la base de données redis comprend :
lorsqu'un code de zone de suivi correspondant est trouvé dans la base de données redis, la détermination du code de zone de suivi correspondant comme premier code de zone de suivi.

3. Procédé de gestion d'accès d'un terminal satellite dans un réseau d'information intégré espace-sol selon la revendication 2, dans lequel ladite détermination d'un premier code de zone de suivi selon un résultat d'interrogation de la base de données redis comprend en outre :
lorsqu'aucun code de zone de suivi correspondant n'est trouvé dans la base de données redis, la détermination du premier code de zone de suivi selon le premier code de grille Beidou en utilisant un algorithme de chemin le plus long.

4. Procédé de gestion d'accès d'un terminal satellite dans un réseau d'information intégré espace-sol selon la revendication 3, dans lequel ladite détermination du premier code de zone de suivi selon le premier code de grille Beidou en utilisant un algorithme de chemin le plus long comprend :
la recherche d'un code de grille Beidou cible parmi la pluralité de codes de grille Beidou stockés dans la base de données redis, en calculant qu'un chemin entre le premier code de grille Beidou et un code de grille Beidou est plus long que celui entre le premier code de grille Beidou et tout autre code de grille Beidou, puis la détermination du chemin comme chemin le plus long et du code de grille Beidou comme code de grille Beidou cible ;
la détermination du code de zone de suivi dans l'arbre de relations de données où se situe le code de grille Beidou cible comme premier code de zone de suivi.

5. Procédé de gestion d'accès d'un terminal satellite dans un réseau d'information intégré espace-sol selon la revendication 1, dans lequel ladite exécution de la gestion d'accès sur le terminal satellite selon le premier code de zone de suivi comprend :
lorsque le premier code de zone de suivi est détecté dans une liste de restrictions prédéfinie, l'exécution d'un accès restreint sur le terminal satellite.

6. Procédé de gestion d'accès d'un terminal satellite dans un réseau d'information intégré espace-sol selon l'une quelconque des revendications 1 à 5, comprenant en outre :
l'obtention d'une carte électronique ;
la conversion des informations de longitude et latitude dans la carte électronique en codes de grille Beidou ;
la génération de l'arbre de relations de données selon les codes de grille Beidou qui sont planifiés et convertis sur la base des codes de zone de suivi, l'arbre de relations de données étant configuré pour représenter des relations de correspondance entre les codes de grille Beidou et les codes de zone de suivi ;
le stockage de l'arbre de relations de données dans la base de données redis.

7. Appareil informatique, comprenant une mémoire pour stocker au moins un programme et un processeur pour charger ledit au moins un programme afin d'exécuter le procédé selon l'une quelconque des revendications 1 à 6 lorsqu'il est exécuté par un processeur.

8. Support de stockage, sur lequel est stocké un programme exécutable par processeur, ledit programme exécutable par processeur, lorsqu'il est exécuté par un processeur, amenant le processeur à mettre en œuvre le procédé selon l'une quelconque des revendications 1 à 6.
